# EUROPÄISCHE PATENTSCHRIFT

(11) **EP 1 728 896 B1**
(45) Veröffentlichungstag und Bekanntmachung des Hinweises auf die Patenterteilung: **25.01.2012**
(21) Anmeldenummer: 06009485.1
(22) Anmeldetag: 09.05.2006
(51) Int. Cl.: C25B 11/03, H01M 4/86, H01M 4/88, H01M 8/08

(54) **Verfahren zur Herstellung von Gasdiffusionselektroden**
Method of manufacturing gas diffusion electrodes
Procede pour produire des électrodes a diffusion gazeuse

(30) Priorität: 21.05.2005 DE 102005023615
(43) Veröffentlichungstag der Anmeldung: 06.12.2006
(73) Patentinhaber: Bayer MaterialScience AG, 51368 Leverkusen (DE)
(72) Erfinder: Bulan, Andreas, 40764 Langenfeld (DE)

(56) Entgegenhaltungen:
- WO-A-03/044245
- DE-A1- 19 647 534
- US-A- 4 602 426
- US-A- 5 676 808

## Beschreibung

Die Erfindung betrifft ein Verfahren zur Herstellung von Gasdiffusionselektroden aus einem elektrisch leitenden Trägerelement und einer Pulvermischung, wenigstens enthaltend einen Katalysator und einen Binder. Die Gasdiffusionselektroden eignen sich z.B. für die Natriumchlorid-Elektrolyse oder für alkalische Brennstoffzellen.

Aus WO 03044245 DE 3 710 168 A und EP 297 377 A ist bekannt, Gasdiffusionselektroden dadurch herzustellen, dass zunächst eine trockene Pulvermischung aus einem Katalysator und einem Binder sowie ggf. weiteren Bestandteilen zu einem Flächengebilde verwalzt werden und anschließend das Flächengebilde durch Walzen auf einen elektrisch leitenden Träger aufgebracht wird. Der Träger hat neben der Funktion des mechanischen Trägers auch die Funktion der Stromzuführung und -abführung zu bzw. von der Gasdiffusionselektrode. Der mechanische Träger kann z.B. ein Metallnetz, -vlies oder -gewebe sein. Das Aufbringen des Flächengebildes auf den Träger kann z.B. durch Pressen oder Walzen erfolgen.

Ein Nachteil dieser Verfahren ist, dass zwei Arbeitsschritte erforderlich sind. In einem ersten Arbeitsschritt wird die Pulvermischung, enthaltend einen Katalysator, einem Binder sowie ggf. weitere Bestandteile, zu einem Flächengebilde verpresst, in einem zweiten Arbeitsschritt wird das Flächengebilde mit dem Träger verpresst. Ein weiterer Nachteil ist, dass während des Verpressens des Flächengebildes mit dem Träger das katalytisch aktive Flächengebilde nochmals einer starken mechanischen Beanspruchung ausgesetzt wird. Dies beeinflusst das Porensystem der katalytisch aktiven Schicht der Gasdiffusionselektrode nachteilig, was mit einer Verschlechterung der elektrochemischen Aktivität der Gasdiffusionselektrode einhergeht.

Aus DE 101 30 441 A ist bekannt, die Zerstörung des Porensystems beim Verpressen dadurch zu vermeiden, dass die Pulvermischung mit einer Flüssigkeit gefüllt wird.

Gemäß DE 101 48 599 A müssen die Presskräfte beim Verpressen des Flächengebildes mit dem Träger sehr genau eingestellt werden, um eine Beschädigung des Flächengebildes zu vermeiden. Dadurch kann eine optimale Porenstruktur nur schwer hergestellt werden.

Es ist notwendig, die Presskraft bei der Verpressung der Pulvermischung so groß zu wählen, dass ein Flächengebilde von ausreichender mechanischer Stabilität hergestellt wird. Bei der Verpressung des Flächengebildes mit dem Träger ist ebenfalls die Presskraft so groß zu wählen, dass eine ausreichend starke Verbindung (Verklammerung) des Flächengebildes mit dem Träger erfolgt. Bei zu geringer Presskraft kann sich das Flächengebilde während des Einsatzes der Gasdiffusionselektrode, z.B. in einer Elektrolysezelle, leicht von dem Träger lösen. Außerdem kann bei zu geringer Presskraft keine ausreichende elektrische Kontaktierung zwischen Flächengebilde und Träger hergestellt werden. Infolgedessen tritt ein zusätzlicher Widerstand auf, wodurch die Spannung der Elektrolyse steigt.

Ein weiterer Nachteil der aus dem Stand der Technik bekannten Verfahren ist, dass nur einlagige Gasdiffusionselektroden herstellbar sind. Unter einer einlagigen Gasdiffusionselektrode wird eine Gasdiffusionselektrode verstanden, welche eine katalytisch aktive Schicht aufweist. Gasdiffusionselektroden können jedoch auch mehrlagig, d.h. aus mehreren Schichten, aufgebaut sein. Dabei können die Schichten unterschiedliche Eigenschaften, z.B. unterschiedliche hydrophobe, hydrophile, elektrische Eigenschaften, aufweisen. Mehrlagige Gasdiffusionselektroden können nicht nach den aus dem Stand der Technik bekannten Verfahren hergestellt werden, da mehrere Schichten durch Verpressen nicht ausreichend stabil untereinander und mit dem elektrisch leitfähigen Träger verbunden werden können.

Aufgabe der vorliegenden Erfindung ist es daher ein Verfahren zur Herstellung einer Gasdiffusionselektrode bereitzustellen, welches möglichst einfach ist und eine Gasdiffusionselektrode mit hervorragenden elektrochemischen Eigenschaften liefert. Mit dem Verfahren sollen sowohl einlagige als auch mehrlagige Gasdiffusionselektroden hergestellt werden können.

Gegenstand der Erfindung ist dementsprechend ein Verfahren zur Herstellung einer Gasdiffusionselektrode, welches die folgenden Schritte umfasst:
(a) Herstellen einer Pulvermischung, welche wenigstens einen Katalysator und einen Binder enthält
(b) Aufbringen der Pulvermischung auf ein elektrisch leitendes Trägerelement
(c) Verpressen der Pulvermischung mit dem elektrisch leitenden Trägerelement.

dadurch gekennzeichnet, dass das Verpressen gemäß Schritt (c) mittels Walzen und mit einer Kraft von 0,01 bis 7 kN/cm erfolgt und dass der Katalysator wenigstens Silber (I) Oxid enthält.

Im Unterschied zu den aus dem Stand der Technik bekannten Verfahren wird bei dem erfindungsgemäßen Verfahren die Pulvermischung, welche den Katalysator und den Binder sowie ggf. weitere Komponenten enthält, direkt auf das elektrisch leitfähige Trägerelement aufgebracht und anschließend mit dem Trägerelement verpresst. Dies spart einen Arbeitsschritt, da die Pulvermischung nicht zuerst zu einem Flächengebilde verpresst wird, bevor das Flächengebilde mit dem Trägerelement verpresst wird.

Die Pulvermischung besteht wenigstens aus einem Katalysator und einem Binder. Als Katalysator dient ein Metall, eine Metallverbindung, eine nichtmetallische Verbindung oder eine Mischung von Metallen, Metallverbindungen oder nichtmetallischen Verbindungen. Bevorzugt handelt es sich bei dem Katalysator um Silber, Silber-I-Oxid, Silber-II-Oxid oder deren Gemische. Bei dem Binder handelt es sich vorzugsweise um ein Polymer, besonders bevorzugt um Polytetrafluorethylen (PTFE). Besonders bevorzugt werden Pulvermischungen eingesetzt, die zu 70 bis 95 Gew.% aus Silber-I-Oxid, 0 bisl5 Gew.% aus Silber-Metall-Pulver und 3 bis 15 Gew.% PTFE bestehen Als Pulvermischung kann auch eine Mischung eingesetzt werden, wie sie z.B. aus DE 101 30 441 A bekannt ist. Dabei ist der Katalysator, z.B. Silber, auf einem PTFE-Substrat gefällt.

Die Pulvermischung kann zusätzliche weitere Komponenten enthalten, z.B. Füllstoffe, enthaltend Nickel-Metall-, Raney-Nickel-, Raney-Silber-Pulver oder deren Gemsiche.

Die Pulvermischung enthaltend einen Katalysator und einen Binder bildet nach dem Aufbringen auf das Trägerelement und dem Verpressen mit dem Trägerelement eine elektrochemisch aktive Schicht der Gasdiffusionselektrode.

Das Herstellen der Pulvermischung gemäß Schritt (a) erfolgt durch Mischen der Pulver des Katalysators und des Binders sowie ggf. weiterer Komponenten. Das Mischen geschieht bevorzugt in einer Mischvorrichtung, welche schnell rotierende Mischelemente, wie z.B. Schlagmesser aufweisen. Zur Vermischung der Komponenten der Pulvermischung rotieren die Mischelemente bevorzugt mit einer Geschwindigkeit von 10 bis 30 m/s oder mit einer Drehzahl von 4000 bis 8000 U/min. Wird der Katalysator, z.B. Silber-I-Oxid, mit PTFE als Binder in einer derartigen Mischvorrichtung vermischt, wird das PTFE zu einer fadenähnlichen Struktur verstreckt und wirkt auf diese Weise als Binder für den Katalysator. Nach dem Vermischen wird die Pulvermischung vorzugsweise gesiebt. Das Sieben erfolgt vorzugsweise mit einer Siebvorrichtung, welche mit Netzen o.dgl. ausgerüstet ist, deren Maschenweite 0,1 bis 1,5 mm, besonders bevorzugt 0,2 bis 1,2 mm beträgt.

In einer weiteren Ausführungsform des Verfahrens wird nach dem Vermischen des Katalysators und des Binders in der Mischvorrichtung die Pulvermischung kompaktiert, beispielsweise durch Verpressen mittels Walzen. Anschließend werden die dabei gebildeten Schülpen erneut in einer Mischvorrichtung mit rotierenden Mischelementen zu einem Pulver verarbeitet. Dadurch wird der Siebrückstand verringert und die Rieselfähigkeit verbessert. Diese Verfahrensweise, umfassend das Mischen der Bestandteile der Pulvermischung in einer Mischvorrichtung, das Kompaktieren der Pulvermischung und das anschließende erneute Mischen in einer Mischvorrichtung, kann mehrfach wiederholt werden.

Durch das Mischen in der Mischvorrichtung mit rotierenden Mischelementen wird Energie in die Pulvermischung eingetragen, wodurch sich die Pulvermischung stark erwärmt. Es wurde gefunden, dass sich die Pulvermischung beim Vermischen nicht zu stark erwärmen sollte, da sonst die elektrochemische Aktivität der Gasdiffusionselektrode verschlechtert wird, d.h. die Spannung während des Elektrolysebetriebs sich erhöht. Deshalb erfolgt das Mischen bevorzugt bei einer Temperatur von 35 bis 80°C, besonders bevorzugt von 40 bis 55°C. Dies kann durch Kühlung während des Vermischens erfolgen, z.B. durch Zusatz eines Kühlmittels, z.B. flüssigen Stickstoffs oder anderer inerter wärmeaufnehmender Substanzen. Eine weitere Möglichkeit der Temperaturkontrolle kann dadurch erfolgen, dass das Mischen unterbrochen wird, um die Pulvermischung abkühlen zu lassen.

Gemäß einer weiteren bevorzugten Ausführungsform des Verfahrens, bei der SiIber(I)-Oxid als Katalysator eingesetzt wird, ist es von Vorteil für die elektrochemische Aktivität der Gasdiffusionselektrode, wenn bei der Herstellung der Pulvermischung, d.h. beim Vermischen, Sieben und ggf. Kompaktieren, die Raumtemperatur bevorzugt 14 bis 23°C. , besonders bevorzugt 16 bis 20°C, und die relative Luftfeuchtigkeit bevorzugt 30 bis 60%, besonders bevorzugt 35 bis 55%, beträgt. Bei höherer Temperatur und relativer Luftfeuchtigkeit wird eine Verschlechterung der elektrochemischen Aktivität der Gasdiffusionselektrode während des Elektrolysebetriebs beobachtet.

Nach der Herstellung der Pulvermischung gemäß Schritt (a) wird in dem nächsten Verfahrensschritt (b) die Pulvermischung auf ein elektrisch leitfähiges Trägerelement aufgebracht. Das elektrisch leitende Trägerelement kann ein Netz, Vlies, Schaum, Gewebe, Geflecht, Streckmetall o.dgl. sein. Das Trägerelement besteht bevorzugt aus Metall, besonders bevorzugt aus Nickel, Silber oder versilbertem Nickel. Das Trägerelement kann einlagig oder mehrlagig sein. Ein mehrlagiges Trägerelement kann aus zwei oder mehreren übereinander angeordneten Netzen, Vliesen, Schäumen, Geweben, Geflechten, Streckmetallen o.dgl. aufgebaut sein. Die Netze, Vliese, Schäume, Gewebe, Geflechte, Streckmetalle o.dgl. können dabei unterschiedlich sein. Sie können z.B. unterschiedlich dick oder unterschiedlich porös sein oder eine unterschiedliche Maschenweite aufweisen. Zwei oder mehrere Netze, Vliese, Schäume, Gewebe, Geflechte, Streckmetalle o.dgl. können z.B. durch Sintern oder Schweißen miteinander verbunden sein. Vorzugsweise wird ein Netz aus Nickel mit einem Drahtdurchmesser von 0,05 bis 0,4 mm, besonders bevorzugt von 0,1 bis 0,30 mm, und einer Maschenweite von 0,2 bis 1,2 mm verwendet.

Das Aufbringen der Pulvermischung auf das elektrisch leitfähige Trägerelement gemäß Schritt (b) erfolgt insbesondere durch Streuen. Das Streuen der Pulvermischung auf das Trägerelement kann z.B. durch ein Sieb geschehen. Besonders vorteilhaft wird auf das Trägerelement eine rahmenförmige Schablone aufgelegt, wobei die Schablone bevorzugt so gewählt wird, dass sie das Trägerelement gerade umfasst. Alternativ kann die Schablone auch kleiner als die Fläche des Trägerelements gewählt werden. In diesem Fall verbleibt nach dem Aufstreuen der Pulvermischung und dem Verpressen mit dem Trägerelement ein unbeschichteter Rand des Trägerelements frei von elektrochemisch aktiver Beschichtung. Die Dicke der Schablone kann entsprechend der auf das Trägerelement aufzubringenden Menge an Pulvermischung gewählt werden. Die Schablone wird mit der Pulvermischung gefüllt. Überschüssiges Pulver kann mittels eines Abstreifers entfernt werden. Danach wird die Schablone entfernt.

In dem nachfolgenden Schritt (c) wird die Pulvermischung mit dem Trägerelement verpresst. Das Verpressen kann insbesondere mittels Walzen erfolgen. Vorzugsweise wird ein Walzenpaar eingesetzt. Es kann jedoch auch eine Walze auf einer im Wesentlichen flachen Unterlage eingesetzt werden, wobei entweder die Walze oder die Unterlage bewegt wird. Ferner kann das Verpressen durch einen Pressstempel erfolgen. Die Kräfte beim Verpressen betragen vorzugsweise 0,01 bis 7 kN/cm.

Im Unterschied zu Verfahren wie sie aus dem Stand der Technik, z.B. DE 101 48 599 A, bekannt sind, ist das Verpressen nach dem erfindungsgemäßen Verfahren unabhängig vom Werkstoff, der Oberflächenrauhigkeit der Walzen und dem Durchmesser der zum Verpressen verwendeten Walzen ist.

Ein weiterer Vorteil des erfindungsgemäßen Verfahrens liegt darin, dass nicht nur einlagige, sondern auch mehrlagige Gasdiffusionselektroden hergestellt werden können. Um mehrlagige Gasdiffusionselektroden herzustellen, werden Pulvermischungen mit unterschiedlichen Zusammensetzungen und unterschiedlichen Eigenschaften schichtweise auf das elektrisch leitfähige Trägerelement aufgebracht. Die Schichten unterschiedlicher Pulvermischungen werden dabei nicht einzeln mit dem Trägerelement verpresst, sondern zunächst nacheinander aufgebracht und anschließend in einem Schritt gemeinsam mit dem Trägerelement verpresst. Beispielsweise kann eine Schicht aus einer Pulvermischung aufgetragen werden, die einen höheren Gehalt des Binders, insbesondere einen höheren Gehalt an PTFE, aufweist als die elektrochemisch aktive Schicht. Eine solche Schicht mit hohem PTFE-Gehalt von 10 bis 50%. kann als Gasdiffusionsschicht wirken. Als Gasdiffusionsschicht kann auch eine Schicht aus PTFE aufgebracht werden. Eine Schicht mit hohem Gehalt an PTFE kann zum Beispiel als unterste Schicht direkt auf das Trägerelement aufgebracht werden. Weitere Schichten mit unterschiedlicher Zusammensetzung können zur Herstellung der Gasdiffusionselektrode aufgebracht werden. Bei mehrlagigen Gasdiffusionselektroden können die gewünschten physikalischen und/oder chemischen Eigenschaften gezielt eingestellt werden. Hierzu zählen u.a. die Hydophobie bzw. Hydrophilie der Schicht, die elektrische Leitfähigkeit, die Gasdurchlässigkeit. So kann beispielsweise ein Gradient einer Eigenschaft aufgebaut werden, indem das Maß der Eigenschaft von Schicht zu Schicht zunimmt oder abnimmt.

Die Dicke der einzelnen Schichten der Gasdiffusionselektrode kann durch die Menge an Pulvermischung, die auf das Trägerelement aufgebracht wird, sowie durch die Presskräfte beim Verpressen eingestellt werden. Die Menge der aufgetragenen Pulvermischung kann beispielsweise durch die Dicke der Schablone eingestellt werden, welche auf das Trägerelement gelegt wird, um die Pulvermischung auf das Trägerelement zu streuen. Gegenüber den aus dem Stand der Technik bekannten Verfahren, z.B. DE 101 48 599 A, hat das erfindungsgemäße Verfahren den Vorteil, dass die Dicke der elektrochemisch aktiven Beschichtung auf dem Trägerelement unabhängig von Parametern der Walzen, wie Walzendurchmesser, Walzenabstand, Zuhaltekraft und Umfangsgeschwindigkeit, eingestellt werden kann.

Um die Presskraft beim Verpressen der Pulvermischung mit dem Trägerelement im Bereich von 0,01 bis 7 kN/cm möglichst niedrig zu halten, kann der Pulvermischung Silber in Form eines Pulvers oder in Form von Flocken, Schuppen o.dgl. zugegeben werden. Besonders vorteilhaft wird hierfür Silber in Form von Pulver mit einem Partikeldurchmesser von weniger als 50 µm eingesetzt. Der Gehalt an Silber-Flocken in der Pulvermischung beträgt vorzugsweise maximal 15 Gew.%. Zudem können auch Gemische verschiedener Silber-Pulver zugesetzt werden, wodurch die elektrochemische Aktivität gesteigert werden kann. Dies wird in einer niedrigeren Elektrolysespannung beobachtet. Besonders vorteilhaft wird ein Silber-Pulver-Typ eingesetzt, dass sowohl die Eigenschaft der Pulvermischung bzgl. z.B. Rieselfähigkeit und die mechanischen Eigenschaften der Elektrode nicht negativ beeinflussen jedoch die elektrochemischen Eigenschaften der Elektrode verbessern, z.B. die Leitfähigkeit oder die elektrochemische Aktivität.

Die nach dem erfindungsgemäßen Verfahren hergestellten Gasdiffusionselektroden eignen sich insbesondere für die Elektrolyse einer Natriumchlorid-Lösung, wobei die Gasdiffusionselektrode als Kathode eingesetzt wird. Ein solches Verfahren zur Elektrolyse einer Natriumchlorid-Lösung unter Verwendung einer Gasdiffusionselektrode als Kathode ist z.B. aus DE 44 44 114 A, bekannt.

### Beispiel

3,5 kg einer Pulvermischung, bestehend aus 7 Gew.% PTFE-Pulver, 88 Gew.% Silber-I-Oxid und 5 Gew.% Silberpulver des Typs 331 der Fa. Ferro, wurden in einem Mischer der Fa. Eichrich, Typ R02, ausgerüstet mit einem Sternwirbler als Mischelement, bei einer Drehzahl von 6000 U/min so gemischt, dass die Temperatur der Pulvermischung 55°C nicht überstieg. Dies wurde dadurch erreicht, dass der Mischvorgang unterbrochen und die Pulvermischung abgekühlt wurde. Insgesamt wurde das Mischen dreimal durchgeführt. Nach dem Mischen wurde die Pulvermischung mittels einer Walzenpresse mit einer Kraft von 0,6 kN/cm kompaktiert. Die erhaltenen Schülpen wurden erneut in drei Mischvorgängen mit Hilfe eines Mischers der Fa. Eichrich gemischt, wobei die Mischtemperatur 55°C nicht überstieg. Nach dem Mischen wurde die Pulvermischung mit einem Sieb mit einer Maschenweite von 1,0 mm gesiebt. Die gesiebte Pulvermischung wurde anschließend auf ein elektrisch leitfähiges Trägerelement aufgebracht. Das Trägerelement war ein Netz aus Nickel mit einer Drahtdicke von 0,14 mm und einer Maschenweite von 0,5 mm. Das Aufbringen erfolgte mit Hilfe einer 2 mm dicken Schablone, wobei das Pulver mit einem Sieb mit einer Maschenweite von 1,0 mm aufgebracht wurde. Überschüssiges Pulver, das über die Dicke der Schablone hinausragte, wurde mittels eines Abstreifers entfernt. Nach Entfernung der Schablone wird der Träger mit der aufgebrachten Pulvermischung mittels einer Walzenpresse mit einer Presskraft von 0,5 kN/cm verpresst. Der Walzenpresse wurde die Gasdiffusionselektrode entnommen.

Die so hergestellte Gasdiffusionselektrode wurde bei der Elektrolyse einer Natriumchlorid-Lösung eingesetzt. Die Zellspannung bei einer Stromdichte von 4 kA/m², einer Elektrolyttemperatur von 90°C und einer Natriumchlorid-Konzentration von 32 Gew.% betrug 2,10 V.

## Patentansprüche

1. Verfahren zur Herstellung einer Gasdiffusionselektrode umfassend die folgenden Schritte:
(a) Herstellen einer Pulvermischung, welche wenigstens einen Katalysator und einen Binder enthält
(b) Aufbringen der Pulvermischung auf ein elektrisch leitendes Trägerelement
(c) Verpressen der Pulvermischung mit dem elektrisch leitenden Trägerelement.
**dadurch gekennzeichnet, dass** das Verpressen gemäß Schritt (c) mittels Walzen und mit einer Kraft von 0,01 bis 7 kN/cm erfolgt, und dass der Katalysator wenigstens Silber-I-Oxid enthält.

2. Verfahren nach Anspruch 1, **dadurch gekennzeichnet, dass** das Aufbringen der Pulvermischung gemäß Schritt (b) durch Streuen erfolgt.

3. Verfahren nach einem der Ansprüche 1-2, **dadurch gekennzeichnet, dass** das Herstellen der Pulvermischung gemäß Schritt (a) durch Mischen des Katalysators und des Binders sowie ggf. weiterer Komponenten in einem Mischwerkzeug erfolgt, wobei die Mischelemente des Mischwerkzeugs mit einer Geschwindigkeit von 4000 bis 8000 U/min oder von 10 bis 30 m/s rotieren.

4. Verfahren nach Anspruch 3, **dadurch gekennzeichnet, dass** das Mischen bei einer Temperatur von 35 bis 80°C erfolgt.

5. Verfahren nach einem der Ansprüche 1-4, **dadurch gekennzeichnet, dass** der Binder wenigstens Polytetrafluorethylen enthält.

6. Verfahren nach einem der Ansprüche 1-5, **dadurch gekennzeichnet, dass** die Pulvermischung zusätzlich Silber, vorzugsweise in Form von Pulver mit einem Partikeldurchmesser von weniger als 50 µm, enthält.

7. Verfahren nach einem der Ansprüche 1-6, **dadurch gekennzeichnet, dass** das elektrisch leitende Trägerelement ein Netz, Vlies, Schaum, Gewebe, Geflecht oder Streckmetall, vorzugsweise aus Nickel, Silber oder versilbertem Nickel, ist.

## Claims

1. Process for producing a gas diffusion electrode, comprising the following steps:
(a) producing a powder mixture comprising at least one catalyst and a binder,
(b) applying the powder mixture to an electrically conductive carrier element,
(c) pressing the powder mixture with the electrically conductive carrier element,
**characterized in that** the pressing in step (c) is effected by means of rollers and with a force of 0.01 to 7 kN/cm, and **in that** the catalyst comprises at least silver(I) oxide.

2. Process according to Claim 1, **characterized in that** the powder mixture is applied in step (b) by scattering.

3. Process according to either of Claims 1-2, **characterized in that** the powder mixture is produced in step (a) by mixing the catalyst and the binder and optionally further components in a mixing tool, the mixing elements of the mixing tool rotating at a speed of 4000 to 8000 rpm or of 10 to 30 m/s.

4. Process according to Claim 3, **characterized in that** the mixing is effected at a temperature of 35 to 80°C.

5. Process according to any of Claims 1-4, **characterized in that** the binder comprises at least polytetrafluoroethylene.

6. Process according to any of Claims 1-5, **characterized in that** the powder mixture additionally comprises silver, preferably in the form of powder with a particle diameter of less than 50 µm.

7. Process according to any of Claims 1-6, **characterized in that** the electrically conductive carrier element is a mesh, nonwoven, foam, woven, braid or expanded metal, preferably composed of nickel, silver or silver-plated nickel.

## Revendications

1. Procédé de fabrication d'une électrode à diffusion de gaz comprenant les étapes suivantes :
(a) la fabrication d'un mélange de poudre, qui contient au moins un catalyseur et un liant,
(b) l'application du mélange de poudre sur un élément support conducteur électrique,
(c) la compression du mélange de poudre avec l'élément support conducteur électrique,
**caractérisé en ce que** la compression selon l'étape (c) a lieu par des cylindres et avec une force de 0,01 à 7 kN/cm, et **en ce que** le catalyseur contient au moins un oxyde d'argent I.

2. Procédé selon la revendication 1, **caractérisé en ce que** l'application du mélange de poudre selon l'étape (b) a lieu par dispersion.

3. Procédé selon l'une quelconque des revendications 1 à 2, **caractérisé en ce que** la fabrication du mélange de poudre selon l'étape (a) a lieu par mélange du catalyseur et du liant, ainsi qu'éventuellement d'autres composants dans un outil de mélange, les éléments de mélange de l'outil de mélange tournant à une vitesse de 4 000 à 8 000 tours/min ou de 10 à 30 m/s.

4. Procédé selon la revendication 3, **caractérisé en ce que** le mélange a lieu à une température de 35 à 80 °C.

5. Procédé selon l'une quelconque des revendications 1 à 4, **caractérisé en ce que** le liant contient au moins du polytétrafluoroéthylène.

6. Procédé selon l'une quelconque des revendications 1 à 5, **caractérisé en ce que** le mélange de poudre contient également de l'argent, de préférence sous la forme d'une poudre ayant un diamètre de particule inférieur à 50 µm.

7. Procédé selon l'une quelconque des revendications 1 à 6, **caractérisé en ce que** l'élément support conducteur électrique est un filet, un non-tissé, une mousse, un tissu, un treillis ou un métal déployé, de préférence en nickel, argent ou nickel argenté.
